# DEMANDE DE BREVET EUROPEEN

(11) **EP 1 863 306 A1**
(43) Date de publication de la demande: **05.12.2007**
(21) Numéro de dépôt: 06291737.2
(22) Date de dépôt: 08.11.2006
(51) Int. Cl.: H04Q 7/38

(54) **Procédé de gestion d'un interfonctionnement entre au moins un réseau local sans fil et un réseau mobile, station mobile, noeud SGSN et passerelle TTG correspondants**

(30) Priorité: 09.11.2005 FR 0553398
(71) Demandeur: Alcatel Lucent, 75008 Paris (FR)
(72) Inventeur: Gras, Laurence, 91440 Bures sur Yvette (FR); El Mghazli, Yacine, 94110 Arcueil (FR); Rombeaut, Jean-Pierre, 59600 Maubeuge (FR)
(74) Mandataire: El Manouni, Josiane

(57) **Abrégé**

L'invention concerne un procédé de gestion d'un interfonctionnement entre au moins un réseau local sans fil (1) et un réseau mobile (2, 3) comprenant les étapes suivantes :
- dans le cas d'un **premier transfert**, depuis le réseau local sans fil vers le réseau mobile, d'une session de communication impliquant une station mobile (MS), ladite session de communication utilisant, avant ledit premier transfert, d'une part un tunnel de bout en bout entre ladite station mobile (MS) et une passerelle TTG, et d'autre part un tunnel GTP entre ladite passerelle TTG et un noeud GGSN : remplacement dudit tunnel GTP entre ladite passerelle TTG et ledit noeud GGSN, par un tunnel GTP entre un noeud SGSN et ledit noeud GGSN ; libération dudit tunnel de bout en bout entre ladite station mobile (MS) et ladite passerelle TTG ;
- dans le cas d'un **deuxième transfert**, depuis le réseau mobile vers le réseau local sans fil, d'une session de communication impliquant une station mobile (MS), ladite session de communication utilisant, avant ledit deuxième transfert, un tunnel GTP entre un noeud SGSN et un noeud GGSN, le procédé comprend les étapes suivantes : établissement d'un tunnel de bout en bout entre une station mobile (MS) et une passerelle TTG ; remplacement dudit tunnel GTP entre ledit noeud SGSN et ledit noeud GGSN, par un tunnel GTP entre ladite passerelle TTG et ledit noeud GGSN.

## Description

### 1. DOMAINE DE L'INVENTION

Le domaine de l'invention est celui de l'interfonctionnement (ou « Interworking » en anglais) entre réseaux, et plus précisément de l'interfonctionnement 3G/WLAN, c'est-à-dire de l'interfonctionnement entre au moins un réseau local sans fil (WLAN, pour « Wireless Local Area Network ») et un réseau mobile 3G.

Par réseau 3G, on entend un réseau mobile de 3^{ème} génération, tel que par exemple un réseau GSM/GPRS (« Global System for Mobile Communication / General Packet Radio Service »), un réseau UMTS (« Universal Mobile Telecommunication System », un réseau CDMA2000 (« Code Division Multiple Access 2000 »), etc.

Un tel interfonctionnement 3G/WLAN vise à permettre aux technologies d'accès IP sans fil (par exemple selon la norme WiFi ou WiMAX) de fonctionner avec des infrastructures de coeur de réseau 3G, afin de permettre à un utilisateur WLAN d'accéder à des services paquets via des réseaux d'accès IP sans fil.

Le problème technique à résoudre est la gestion de la localisation dans le contexte de l'interfonctionnement 3G/WLAN. En d'autres termes, il s'agit de permettre à l'utilisateur d'être mobile avec des accès hétérogènes, à savoir des accès IP sans fil et des accès radio 3G. L'objectif est de permettre à un utilisateur WLAN de passer d'un réseau d'accès IP (WLAN) à un réseau mobile 3G, et vice versa, tout en conservant une continuité de service.

### 2. ART ANTÉRIEUR

La norme 3GPP (« 3^{rd} Generation Patrnership Project ») prévoit six scénarios pour l'interfonctionnement 3G/WLAN.

Le scénario 3 concerne l'accès aux services à commutation de paquets (« Packet-Switched (PS) services » en anglais) 3G dans un environnement WLAN. Pour cela, le trafic de données de l'utilisateur empreinte un tunnel établi entre le réseau WLAN et le coeur de réseau 3G, via une passerelle PDG (pour « Packet Data Gateway »)

Dans une variante d'architecture globale pour le scénario 3 (voir l'annexe F du document de normalisation 3GPP TS 23234), une session de communication utilise d'une part un tunnel de bout en bout (par exemple de type VPN/Ipsec) entre une station mobile (ou MS, pour « Mobile Station ») et une passerelle TTG (pour « Tunnel Termination Gateway »), et d'autre part un tunnel GTP (pour « GPRS Tunnelling Protocol ») entre la passerelle TTG et un noeud GGSN (pour « Gateway GPRS Support Node »). L'avantage de cette variante est qu'elle permet de réutiliser d'un noeud GGSN existant et ne nécessite pas de passerelle PDG (la passerelle TTG contient les fonctions autres que celles communes à la passerelle PDG et au noeud GGSN).

Cependant, le scénario 3 ne permet pas de maintenir une continuité de service à travers les réseaux d'accès radio 3G et WLAN. En d'autres termes, pour effectuer le transfert (« handover » en anglais) d'une communication depuis un premier vers un second réseau d'accès (c'est-à-dire passer d'un réseau WLAN à un réseau 3G, ou vice versa), la session de communication (ou session de service) courante via le premier réseau d'accès doit impérativement être interrompue et remplacée par une nouvelle session de communication via le second réseau d'accès.

C'est précisément l'objet du scénario 4, qui se distingue du scénario 3 en ce qu'il prévoit un tel maintien d'une continuité de service pendant un transfert entre les réseaux d'accès radio 3G et WLAN.

Or, aujourd'hui, seuls les trois premiers scénarios précités sont définis en terme d'architecture dans la norme 3GPP.

### 3. OBJECTIFS DE L'INVENTION

L'un des objectifs de la présente invention, dans au moins un mode de réalisation, est de fournir une technique permettant la mise en oeuvre du scénario 4 pour l'interfonctionnement 3G/WLAN, c'est-à-dire permettant une continuité de service pendant un transfert (handover) entre des réseaux d'accès radio 3G et WLAN.

L'invention a également pour objectif, dans au moins un mode de réalisation, de fournir une technique permettant une continuité de service pendant un transfert (handover) entre deux réseaux d'accès WLAN en amont d'un même coeur de réseau 3G, pour une session de communication grâce à laquelle une station mobile accède à au moins un service à commutation de paquets 3G.

Un autre objectif de l'invention, dans au moins un mode de réalisation, est de fournir une technique simple à mettre en oeuvre et peu coûteuse.

Un objectif complémentaire de l'invention, dans au moins un mode de réalisation, est de fournir une technique permettant de conserver le noeud GGSN comme point d'ancrage, malgré que l'utilisateur (ou plus précisément sa station mobile) se déplace depuis une zone de couverture d'un réseau WLAN vers une zone de couverture d'un réseau 3G, ou vice versa.

Un autre objectif de l'invention, dans au moins un mode de réalisation, est de fournir une technique nécessitant peu de modification des stations mobiles.

### 4. EXPOSÉ DE L'INVENTION

Dans un mode de réalisation particulier de l'invention, il est proposé un procédé de gestion d'un interfonctionnement entre au moins un réseau local sans fil et un réseau mobile. Ce procédé comprend les étapes suivantes, dans le cas d'un premier transfert, depuis le réseau local sans fil vers le réseau mobile, d'une session de communication impliquant une station mobile, ladite session de communication utilisant, avant ledit premier transfert, d'une part un tunnel de bout en bout entre ladite station mobile et une passerelle TTG, et d'autre part un tunnel GTP entre ladite passerelle TTG et un noeud GGSN:
- remplacement dudit tunnel GTP entre ladite passerelle TTG et ledit noeud GGSN, par un tunnel GTP entre un noeud SGSN et ledit noeud GGSN ;
- libération dudit tunnel de bout en bout entre ladite station mobile et ladite passerelle TTG.

Ainsi, dans ce mode de réalisation particulier, l'invention repose sur l'idée de considérer la passerelle TTG, du point de vue du coeur du réseau mobile, comme s'il s'agissait d'un noeud SGSN (pour « Serving GPRS Support Node »). En d'autres termes, pour le noeud GGSN, le premier transfert se traduit par un basculement d'un tunnel GTP dans lequel il est impliqué, depuis la passerelle TTG (que le noeud GGSN voit comme un noeud SGSN particulier) vers un noeud SGSN « classique ». De cette façon, on conserve le noeud GGSN comme point d'ancrage lors du premier transfert depuis le réseau WLAN vers le réseau mobile.

De façon avantageuse, dans le cas dudit premier transfert, ladite étape de remplacement dudit tunnel GTP entre ladite passerelle TTG et ledit noeud GGSN, par un tunnel GTP entre un noeud SGSN et ledit noeud GGSN, comprend les étapes suivantes :
- la station mobile envoie au noeud SGSN une requête de mise à jour d'une zone de routage, comprenant un identifiant neutre indiquant que la station mobile vient d'un réseau local sans fil ;
- le noeud SGSN envoie à un serveur de localisation une requête d'informations de localisation relatives à ladite session de communication, et en retour ledit serveur de localisation envoie au noeud SGSN une adresse de ladite passerelle TTG ;
- le noeud SGSN envoie à ladite passerelle TTG une requête d'informations de contexte relatives à ladite session de communication, et en retour ladite passerelle TTG envoie au noeud SGSN lesdites informations de contexte ;
- le noeud SGSN envoie au noeud GGSN une requête de mise à jour d'informations de contexte relatives à ladite session de communication ;
- le noeud SGSN et le noeud GGSN établissent entre eux un tunnel GTP.

Il est important de noter que l'envoie par la station mobile d'un identifiant neutre au sein de la requête de mise à jour d'une zone de routage (pour indiquer que la station mobile vient d'un réseau WLAN) permet d'éviter que le réseau WLAN gère la localisation de la station mobile et qu'il fournisse des informations de localisation à la station mobile (afin que cette dernière les fournisse au noeud SGSN).

Au contraire, dans ce mode de réalisation particulier de l'invention, la gestion de la localisation de la station mobile est effectuée par le coeur du réseau mobile : grâce à un échange d'informations entre le serveur de localisation (HLR) et le noeud SGSN, ce dernier sait auprès de quelle passerelle TTG il peut obtenir les informations de contexte qui lui sont nécessaires pour établir un tunnel GTP avec le noeud GGSN tout en assurant une continuité de service (la session de communication n'est pas interrompue).

Avantageusement, dans le cas dudit premier transfert, ladite étape de libération dudit tunnel de bout en bout entre ladite station mobile et ladite passerelle TTG comprend les étapes suivantes :
- le noeud SGSN envoie au serveur de localisation une requête de mise à jour des informations de localisation relatives à ladite session de communication ;
- le serveur de localisation envoie à ladite passerelle TTG une requête de libération dudit tunnel de bout en bout entre ladite station mobile et ladite passerelle TTG.

De façon avantageuse, dans le cas dudit premier transfert, ladite étape de libération dudit tunnel de bout en bout entre ladite station mobile et ladite passerelle TTG comprend en outre les étapes suivantes :
- ladite passerelle TTG envoie au serveur de localisation un message de confirmation de ladite libération ;
- le serveur de localisation envoie au noeud SGSN un message de confirmation de ladite mise à jour des informations de localisation ;
- le noeud SGSN envoie à la station mobile un message d'acceptation de la mise à jour de la zone de routage.

Dans un mode de réalisation avantageux de l'invention, ledit procédé comprend les étapes suivantes, dans le cas d'un deuxième transfert, depuis le réseau mobile vers le réseau local sans fil, d'une session de communication impliquant une station mobile, ladite session de communication utilisant, avant ledit deuxième transfert, un tunnel GTP entre un noeud SGSN et un noeud GGSN :
- établissement d'un tunnel de bout en bout entre une station mobile et une passerelle TTG ;
- remplacement dudit tunnel GTP entre ledit noeud SGSN et ledit noeud GGSN, par un tunnel GTP entre ladite passerelle TTG et ledit noeud GGSN.

Ainsi, dans ce mode de réalisation particulier, l'invention repose à nouveau sur l'idée de considérer la passerelle TTG, du point de vue du coeur du réseau mobile, comme s'il s'agissait d'un noeud SGSN. En d'autres termes, pour le noeud GGSN, le deuxième transfert se traduit par un basculement d'un tunnel GTP dans lequel il est impliqué, depuis un noeud SGSN « classique » vers la passerelle TTG (qu('il voit comme un noeud SGSN particulier). Ici encore, on conserve le noeud GGSN comme point d'ancrage lors du deuxième transfert depuis le réseau mobile vers le réseau WLAN.

De façon avantageuse, dans le cas dudit deuxième transfert, ladite étape d'établissement d'un tunnel de bout en bout entre ladite station mobile et ladite passerelle TTG comprend les étapes suivantes :
- la station mobile obtient une adresse de la passerelle TTG ;
- la station mobile envoie une requête d'établissement d'un tunnel de bout en bout à la passerelle TTG ;
- la passerelle TTG obtient d'un serveur AAA des informations d'autorisation et d'authentification permettant l'établissement d'un tunnel de bout en bout entre ladite station mobile et ladite passerelle TTG.

Avantageusement, dans le cas dudit deuxième transfert, ladite étape remplacement dudit tunnel GTP entre ledit noeud SGSN et ledit noeud GGSN, par un tunnel GTP entre ladite passerelle TTG et ledit noeud GGSN, comprend les étapes suivantes :
- la passerelle TTG envoie au serveur de localisation une requête d'informations de localisation relatives à ladite session de communication, et en retour ledit serveur de localisation envoie à la passerelle TTG une adresse dudit noeud SGSN ;
- la passerelle TTG envoie audit noeud SGSN une requête d'informations de contexte relatives à ladite session de communication, et en retour ledit noeud SGSN envoie à la passerelle TTG lesdites informations de contexte ;
- la passerelle TTG envoie au noeud GGSN une requête de mise à jour d'informations de contexte relatives à ladite session de communication ;
- la passerelle TTG et le noeud GGSN établissent entre eux un tunnel GTP.

De façon avantageuse, dans le cas dudit deuxième transfert, ladite étape d'établissement d'un tunnel de bout en bout entre ladite station mobile et ladite passerelle TTG comprend en outre les étapes suivantes :
- la passerelle TTG envoie au serveur de localisation une requête de mise à jour des informations de localisation relatives à ladite session de communication ;
- le serveur de localisation envoie au noeud SGSN une requête de suppression d'informations de localisation relatives à ladite session de communication ;
- le noeud SGSN envoie au serveur de localisation un message de confirmation de ladite suppression ;
- le serveur de localisation envoie à la passerelle TTG un message de confirmation de ladite mise à jour des informations de localisation ;
- la passerelle TTG envoie à la station mobile un message d'acceptation de l'établissement d'un tunnel de bout en bout.

Dans un mode de réalisation avantageux de l'invention, ledit procédé comprend les étapes suivantes, dans le cas d'un troisième transfert, depuis un premier réseau local sans fil vers un second réseau local sans fil, d'une session de communication impliquant une station mobile, ladite session de communication utilisant, avant ledit troisième transfert, d'une part un premier tunnel de bout en bout entre ladite station mobile et une passerelle TTG, et d'autre part un tunnel GTP entre ladite passerelle TTG et un noeud GGSN :
- remplacement dudit premier tunnel de bout en bout entre ladite station mobile et ladite passerelle TTG, par un second tunnel de bout en bout entre ladite station mobile et ladite passerelle TTG ;
- conservation dudit tunnel GTP entre ladite passerelle TTG et ledit noeud GGSN.

Du fait que c'est la même passerelle TTG qui est utilisée avant et après le troisième transfert, on peut conserver le même tunnel GTP entre cette passerelle et le noeud GGSN. Ici encore, on conserve le noeud GGSN comme point d'ancrage lors du troisième transfert depuis le réseau mobile vers le réseau WLAN.

De façon avantageuse, dans le cas dudit troisième transfert, ladite étape de remplacement dudit premier tunnel de bout en bout par ledit second tunnel de bout en bout comprend les étapes suivantes :
- la station mobile obtient une adresse de la passerelle TTG ;
- la station mobile envoie une requête d'établissement d'un second tunnel de bout en bout à la passerelle TTG ;
- la passerelle TTG obtient d'un serveur AAA des informations d'autorisation et d'authentification relatives à ladite session de communication et permettant l'établissement d'un second tunnel de bout en bout entre ladite station mobile et ladite passerelle TTG ;
- la passerelle TTG libère ledit premier tunnel de bout en bout et établit ledit second tunnel de bout en bout.

Avantageusement, dans le cas dudit troisième transfert, ladite étape de remplacement dudit premier tunnel de bout en bout par ledit second tunnel de bout en bout comprend en outre les étapes suivantes :
- la passerelle TTG envoie au serveur AAA une requête de mise à jour des informations d'autorisation et d'authentification relatives à ladite session de communication ;
- le serveur AAA envoie à la passerelle TTG un message de confirmation de ladite mise à jour des informations d'autorisation et d'authentification ;
- la passerelle TTG envoie à la station mobile un message d'acceptation de l'établissement d'un second tunnel de bout en bout.

Dans un mode de réalisation, l'invention concerne une station mobile permettant la mise en oeuvre d'un procédé de gestion d'un interfonctionnement entre au moins un réseau local sans fil et un réseau mobile. La station mobile comprend, de façon à permettre un premier transfert, depuis le réseau local sans fil vers le réseau mobile, d'une session de communication impliquant une station mobile et utilisant avant ledit premier transfert, d'une part un tunnel de bout en bout entre ladite station mobile et une passerelle TTG, et d'autre part un tunnel GTP entre ladite passerelle TTG et ledit noeud GGSN:
- des moyens d'envoi à un noeud SGSN d'une requête de mise à jour d'une zone de routage, avec un identifiant neutre indiquant que ladite station mobile vient d'un réseau local sans fil.

Plus généralement, la station mobile selon l'invention comprend des moyens de mise en oeuvre du procédé de gestion d'un interfonctionnement 3G/WLAN tel que décrit précédemment (dans l'un quelconque de ses différents modes de réalisation).

Dans un mode de réalisation, l'invention concerne un noeud SGSN permettant la mise en oeuvre d'un procédé de gestion d'un interfonctionnement entre au moins un réseau local sans fil et un réseau mobile. Le noeud SGSN comprend, de façon à permettre un premier transfert, depuis le réseau local sans fil vers le réseau mobile, d'une session de communication impliquant une station mobile et utilisant avant ledit premier transfert, d'une part un tunnel de bout en bout entre ladite station mobile et une passerelle TTG, et d'autre part un tunnel GTP entre ladite passerelle TTG et ledit noeud GGSN:
- des moyens de réception d'une requête de mise à jour d'une zone de routage, envoyée par ladite station mobile et comprenant un identifiant neutre indiquant que la station mobile vient d'un réseau local sans fil ;
- des moyens d'envoi à un serveur de localisation d'une requête d'informations de localisation relatives à ladite session de communication, et des moyens de réception en retour d'une adresse de ladite passerelle TTG ;
- des moyens d'envoi à ladite passerelle TTG d'une requête d'informations de contexte relatives à ladite session de communication, et des moyens de réception en retour desdites informations de contexte ;
- des moyens d'envoi au noeud GGSN d'une requête de mise à jour d'informations de contexte relatives à ladite session de communication ;
- des moyens d'établissement d'un tunnel GTP entre le noeud SGSN et le noeud GGSN.

Plus généralement, le noeud SGSN selon l'invention comprend des moyens de mise en oeuvre du procédé de gestion d'un interfonctionnement 3G/WLAN tel que décrit précédemment (dans l'un quelconque de ses différents modes de réalisation).

Avantageusement, ledit noeud SGSN comprend en outre, de façon à permettre un deuxième transfert, depuis le réseau mobile vers le réseau local sans fil, d'une session de communication impliquant une station mobile (MS), ladite session de communication utilisant, avant ledit deuxième transfert, un tunnel GTP entre un noeud SGSN et un noeud GGSN:
- des moyens de réception d'une requête d'informations de contexte relatives à ladite session de communication (SGSN Context Request), envoyée par une passerelle TTG ;
- des moyens d'envoi desdites informations de contexte à ladite passerelle TTG.

Dans un mode de réalisation, l'invention concerne une passerelle TTG permettant la mise en oeuvre d'un procédé de gestion d'un interfonctionnement entre au moins un réseau local sans fil et un réseau mobile. La passerelle TTG comprend, de façon à permettre un premier transfert, depuis le réseau local sans fil vers le réseau mobile, d'une session de communication impliquant une station mobile (MS) et utilisant avant ledit premier transfert, d'une part un tunnel de bout en bout entre ladite station mobile et ladite passerelle TTG, et d'autre part un tunnel GTP entre ladite passerelle TTG et ledit noeud GGSN :
- des moyens de réception d'une requête d'informations de contexte relatives à ladite session de communication, envoyée par un noeud SGSN ;
- des moyens d'envoi desdites informations de contexte au noeud SGSN.

Plus généralement, la passerelle TTG selon l'invention comprend des moyens de mise en oeuvre du procédé de gestion d'un interfonctionnement 3G/WLAN tel que décrit précédemment (dans l'un quelconque de ses différents modes de réalisation).

Avantageusement, ladite passerelle TTG comprend en outre, de façon à permettre un deuxième transfert, depuis le réseau mobile vers le réseau local sans fil, d'une session de communication impliquant une station mobile, ladite session de communication utilisant, avant ledit deuxième transfert, un tunnel GTP entre un noeud SGSN et un noeud GGSN :
- des moyens d'envoi à un serveur de localisation d'une requête d'informations de localisation relatives à ladite session de communication, et des moyens de réception en retour d'une adresse dudit noeud SGSN ;
- des moyens d'envoi audit noeud SGSN d'une requête d'informations de contexte relatives à ladite session de communication, et des moyens de réception en retour desdites informations de contexte ;
- des moyens d'envoi au noeud GGSN d'une requête de mise à jour d'informations de contexte relatives à ladite session de communication ;
- des moyens d'établissement d'un tunnel GTP entre la passerelle TTG et le noeud GGSN.

De façon avantageuse, ladite passerelle TTG comprend en outre, de façon à permettre un troisième transfert, depuis un premier réseau local sans fil vers un second réseau local sans fil, d'une session de communication impliquant une station mobile, ladite session de communication utilisant, avant ledit troisième transfert, d'une part un premier tunnel de bout en bout entre ladite station mobile et ladite passerelle TTG, et d'autre part un tunnel GTP entre ladite passerelle TTG et un noeud GGSN :
- des moyens de réception d'une requête d'établissement d'un second tunnel de bout en bout, envoyée par la station mobile ;
- des moyens d'obtention, auprès d'un serveur AAA, d'informations d'autorisation et d'authentification relatives à ladite session de communication et permettant l'établissement d'un second tunnel de bout en bout entre ladite station mobile et ladite passerelle TTG ;
- des moyens de libération dudit premier tunnel de bout en bout ;
- des moyens d'établissement dudit second tunnel de bout en bout.

### 5. LISTE DES FIGURES

D'autres caractéristiques et avantages de modes de réalisation de l'invention apparaîtront à la lecture de la description suivante d'un mode de réalisation préférentiel de l'invention, donné à titre d'exemple indicatif et non limitatif (tous les modes de réalisation de l'invention ne sont pas limités aux caractéristiques et avantages de ce mode de réalisation préférentiel), et des dessins annexés, dans lesquels :
- la figure 1 présente un synoptique d'un mode de réalisation particulier d'un système d'interfonctionnement 3G/WLAN selon l'invention ;
- la figure 2 illustre un premier transfert de session de communication, depuis le réseau WLAN vers le réseau mobile 3G ;
- la figure 3 présente un exemple de diagramme d'échange de messages entre différentes entités du système, dans le cas du premier transfert illustré sur la figure 2 ;
- la figure 4 illustre un deuxième transfert de session de communication, depuis le réseau mobile 3G vers le réseau WLAN ;
- la figure 5 présente un exemple de diagramme d'échange de messages entre différentes entités du système, dans le cas du deuxième transfert illustré sur la figure 4 ;
- la figure 6 illustre un troisième transfert de session de communication, depuis un premier vers un second réseau WLAN ; et
- la figure 7 présente un exemple de diagramme d'échange de messages entre différentes entités du système, dans le cas du troisième transfert illustré sur la figure 6.

### 6. DESCRIPTION DÉTAILLÉE

Sur toutes les figures du présent document, les éléments et étapes identiques sont désignés par une même référence numérique.

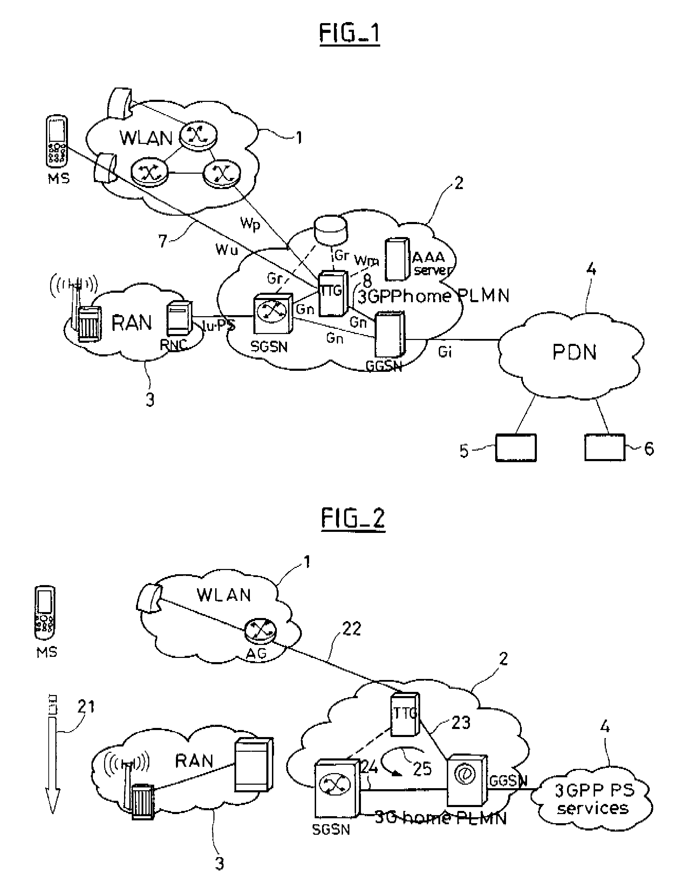

La **figure 1** illustre un mode de réalisation particulier d'un système d'interfonctionnement 3G/WLAN selon l'invention, permettant de mettre en oeuvre le procédé de gestion d'un interfonctionnement 3G/WLAN selon un mode de réalisation particulier de l'invention.

On suppose qu'une station mobile MS souhaite accéder à un ou plusieurs services 3GPP à commutation de paquets (« 3GPP PS services » en anglais) offerts par un ou plusieurs serveurs d'application 5, 6 reliés à un réseau PDN (pour « Public data Network » en anglais, ou « Réseau public de transmission de données » en français) 4.

On suppose également que cette station mobile est à accès hybride dans le sens où elle peut utiliser :
- soit le réseau d'accès (ou RAN, pour « Radio Access Network ») 3 et le coeur (aussi appelé « 3GPP Home PLMN ») 2 d'un réseau mobile 3G. Dans ce cas, conformément aux normes 3GPP, une session de communication utilise un tunnel GTP (non référencé sur la figure 1) entre un noeud SGSN et un noeud GGSN (avec une interface Gn) ;
- soit un réseau WLAN 1, qui joue le rôle d'un réseau d'accès, et le coeur 2 du réseau mobile 3G précité. Dans ce cas, et en se plaçant dans le contexte défini dans l'annexe F du document de normalisation 3GPP TS 23234, une session de communication utilise un tunnel de bout en bout 7 entre la station mobile MS et une passerelle TTG (avec une interface Wu), et un tunnel GTP 8 entre la passerelle TTG et le noeud GGSN (avec une interface Gn').

De façon classique, le noeud SGSN est relié à un serveur de localisation HLR (pour « Home Location Register »), avec une interface Gr. La passerelle TTG est reliée à un serveur AAA (pour « Authentication, Authorization & Accounting »), avec une interface Wm.

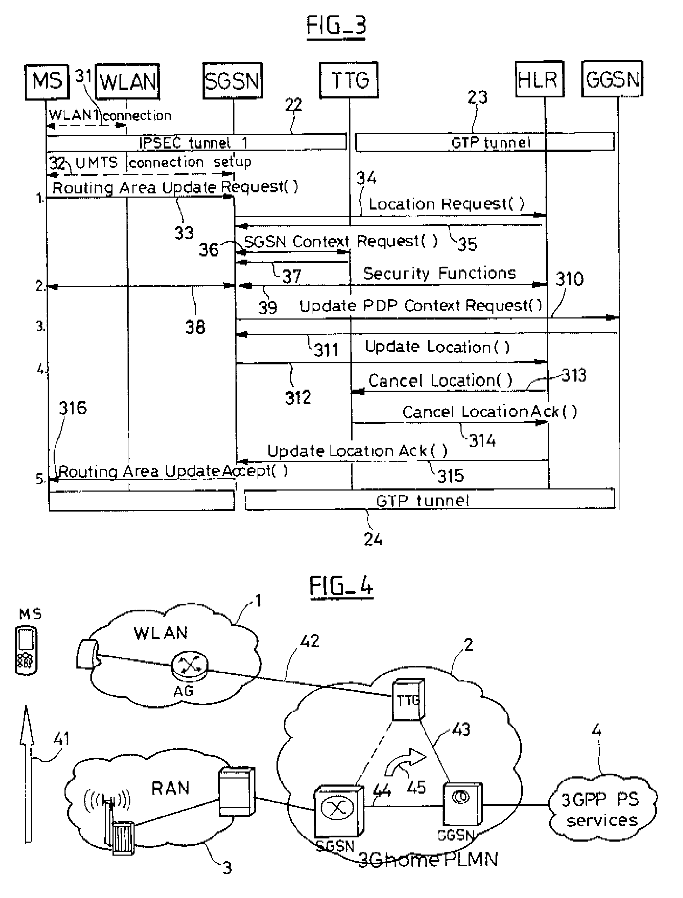

Selon un mode de réalisation particulier de l'invention, la passerelle TTG est également reliée au noeud SGSN, avec une interface Gn, et au serveur HLR, avec une interface Gr'. L'utilisation de ces nouvelles connexions est présentée en détail par la suite, en relation avec les figures 3, 5 et 7, correspondant à trois types distincts de transfert d'une session de communication impliquant la station mobile MS.

La **figure 2** illustre un premier transfert de session de communication, depuis le réseau WLAN vers le réseau mobile 3G, selon un mode de réalisation particulier du procédé selon l'invention.

On suppose que la station mobile MS se déplace (comme illustré par la flèche référencée 21) de la zone de couverture du réseau WLAN 1 vers celle du réseau mobile 3G 3.

On suppose également que la session de communication utilise, avant le premier transfert, un tunnel de bout en bout 22 entre la station mobile MS et la passerelle TTG, et un premier tunnel GTP 23 entre la passerelle TTG et le noeud GGSN.

Pour effectuer ce premier transfert, un mode de réalisation particulier du procédé de l'invention comprend les étapes suivantes :
- remplacement du premier tunnel GTP 23 entre la passerelle TTG et le noeud GGSN, par un second tunnel GTP 24 entre le noeud SGSN et le noeud GGSN (ce remplacement est illustré par la flèche référencée 25) ;
- libération du tunnel de bout en bout 22 entre la station mobile MS et la passerelle TTG.

On présente maintenant, en relation avec la **figure 3,** un exemple de diagramme d'échange de messages entre différentes entités du système pour effectuer le premier transfert illustré sur la figure 2.

Les entités concernées, qui ont déjà été présentées ci-dessus, sont les suivantes : la station mobile MS, le réseau WLAN, le noeud SGSN, la passerelle TTG, le serveur HLR et le noeud GGSN.

Avant le premier transfert, une session de communication impliquant la station mobile MS utilise un tunnel de bout en bout 22 entre la station mobile MS et la passerelle TTG (s'appuyant notamment sur une connexion 31 entre la station mobile MS et le réseau WLAN), et un premier tunnel GTP 23 entre la passerelle TTG et le noeud GGSN.

Après s'être déplacée, la station mobile MS établit une connexion UMTS 32 avec le noeud SGSN.

Puis, la station mobile MS envoie au noeud SGSN une requête de mise à jour d'une zone de routage (Routing Area Update Request) 33, comprenant un identifiant RAI (pour « Routing Area Identification ») neutre indiquant que la station mobile MS vient d'un réseau WLAN. Cette valeur neutre d'identifiant RAI est réservée pour toutes les couvertures WLAN, mais ne définit aucune information de localisation de la station mobile MS.

Le noeud SGSN envoie au serveur HLR une requête d'informations de localisation relatives à la session de communication (Location Request) 34, pour identifier la passerelle TTG précédemment impliquée dans la session de communication. En retour (35), le serveur HLR envoie au noeud SGSN une adresse de là passerelle TTG.

Le noeud SGSN envoie à la passerelle TTG une requête d'informations de contexte PDP (pour « Packet Data Protocol ») relatives à la session de communication (SGSN Context Request) 36. En retour (37), la passerelle TTG envoie au noeud SGSN les informations de contexte PDP demandées (SGSN Context Response). Les fonctions de sécurité peuvent alors être exécutées (38, 39).

Le noeud SGSN envoie au noeud GGSN une requête de mise à jour d'informations de contexte relatives à la session de communication (Update PDP Context Request) 310. Le noeud GGSN met à jour les champs de contexte PDP de la table de routage GTP (« GPRS Tunneling Protocol »), en remplaçant l'adresse IP de la passerelle TTG par l'adresse IP du noeud SGSN. Le noeud GGSN retourne une confirmation de mise à jour d'informations de contexte (Update PDP Context Response) 311. Le noeud SGSN et le noeud GGSN établissent entre eux un nouveau (second) tunnel GTP 24.

Le noeud SGSN informe le serveur HLR du changement de localisation en lui envoyant une requête de mise à jour des informations de localisation relatives à la session de communication (Update Location) 312.

Le serveur HLR demande la libération du tunnel de bout en bout 22 entre la station mobile MS et la passerelle TTG en envoyant à la passerelle TTG un message d'annulation de localisation (Cancel Location) 313.

Après la libération du tunnel de bout en bout 22 entre la station mobile MS et la passerelle TTG, la passerelle TTG envoie au serveur HLR un message de confirmation de la libération (Cancel Location Ack) 314. Alors, le serveur HLR envoie au noeud SGSN un message de confirmation de la mise à jour des informations de localisation (Update Location Ack) 315. Enfin, le noeud SGSN envoie à la station mobile MS un message d'acceptation de la mise à jour de la zone de routage (Routing Area Update Accept) 316.

La **figure 4** illustre un deuxième transfert de session de communication, depuis le réseau mobile 3G vers le réseau WLAN, selon un mode de réalisation particulier du procédé selon l'invention.

On suppose que la station mobile MS se déplace (comme illustré par la flèche référencée 41) de la zone de couverture du réseau mobile 3G 3 vers celle du réseau WLAN 1.

On suppose également que la session de communication utilise, avant le deuxième transfert, un premier tunnel GTP 44 entre le noeud SGSN et le noeud GGSN.

Pour effectuer ce deuxième transfert, un mode de réalisation particulier du procédé de l'invention comprend les étapes suivantes :
- établissement d'un tunnel de bout en bout 42 entre la station mobile MS et la passerelle TTG ;
- remplacement du premier tunnel GTP 44 entre le noeud SGSN et le noeud GGSN, par un second tunnel GTP 43 entre la passerelle TTG et le noeud GGSN (ce remplacement est illustré par la flèche référencée 45).

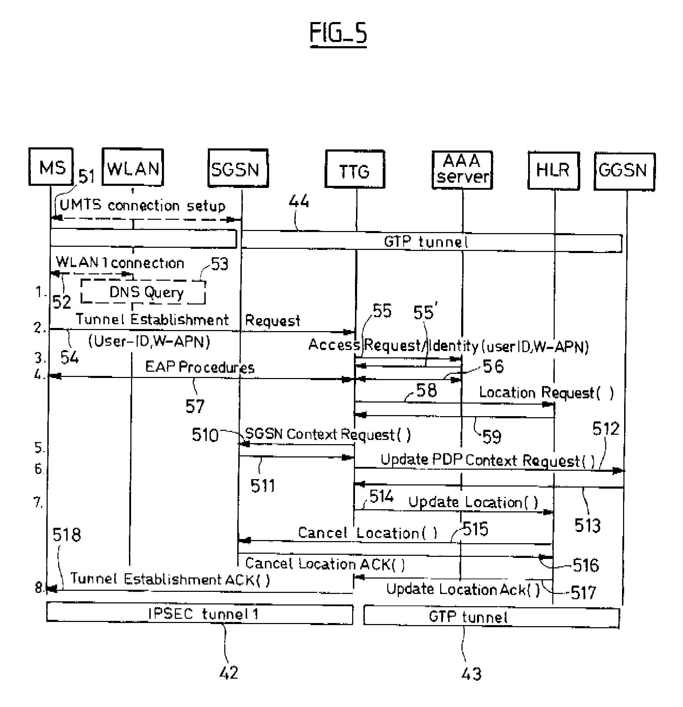

On présente maintenant, en relation avec la **figure 5**, un exemple de diagramme d'échange de messages entre différentes entités du système pour effectuer le deuxième transfert illustré sur la figure 4.

Les entités concernées, qui ont déjà été présentées ci-dessus, sont les suivantes : la station mobile MS, le réseau WLAN, le noeud SGSN, la passerelle TTG, le serveur AAA, le serveur HLR et le noeud GGSN.

Avant le deuxième transfert, la station mobile MS a établi une connexion UMTS 51 avec le noeud SGSN. En outre, une session de communication impliquant la station mobile MS utilise un tunnel GTP 44 entre le noeud SGSN et le noeud GGSN.

Après s'être déplacée, la station mobile MS établit une connexion 52 avec le réseau WLAN.

Puis, la station mobile MS effectue une demande DNS (pour « Domain Name System ») 53, afin de retrouver l'adresse IP de l'extrémité distante du futur tunnel GTP 42, c'est-à-dire la passerelle TTG.

Après qu'elle a obtenu l'adresse IP de la passerelle TTG, la station mobile MS envoie une requête d'établissement d'un tunnel de bout en bout (Tunnel Establishment Request (User-ID, W-APN)) 54 à la passerelle TTG.

Après réception de la requête précitée 54, la passerelle TTG contacte le serveur AAA (55, 55'), afin d'obtenir des informations d'autorisation et d'authentification permettant de lancer les procédures EAP (pour « Extensible Authentication Protocol ») 56, 57 et l'établissement d'un tunnel de bout en bout 42 entre la station mobile MS et la passerelle TTG.

La passerelle TTG envoie au serveur HLR une requête d'informations de localisation relatives à la session de communication (Location Request) 58. Si la session est ouverte, le serveur HLR envoie en retour (59) à la passerelle TTG l'adresse du IP du noeud SGSN.

La passerelle TTG envoie au noeud SGSN une requête d'informations de contexte PDP relatives à la session de communication (SGSN Context Request) 510. En retour (511), le noeud SGSN envoie à la passerelle TTG les informations de contexte PDP demandées (SGSN Context Response) 511.

La passerelle TTG envoie au noeud GGSN une requête de mise à jour d'informations de contexte relatives à la session de communication (Update PDP Context Request) 512.

Le noeud GGSN met à jour les champs de contexte PDP de la table de routage GTP (« GPRS Tunneling Protocol »), en remplaçant l'adresse IP du noeud SGSN par l'adresse IP de la passerelle TTG. Le noeud GGSN retourne une confirmation de mise à jour d'informations de contexte (Update PDP Context Response) 513. La passerelle TTG et le noeud GGSN établissent entre eux un nouveau (second) tunnel GTP 43.

La passerelle TTG envoie au serveur HLR une requête de mise à jour des informations de localisation relatives à la session de communication (Update Location) 514. Le serveur HLR envoie au noeud SGSN une requête de suppression d'informations de localisation relatives à la session de communication (Cancel Location) 515. Le noeud SGSN envoie au serveur HLR un message de confirmation de la suppression (Cancel Location Ack) 516. Le serveur HLR envoie à la passerelle TTG un message de confirmation de la mise à jour des informations de localisation (Update Location Ack) 517.

Enfin, la passerelle TTG envoie à la station mobile MS un message d'acceptation de l'établissement d'un tunnel de bout en bout (Tunnel Establishment Ack) 518.

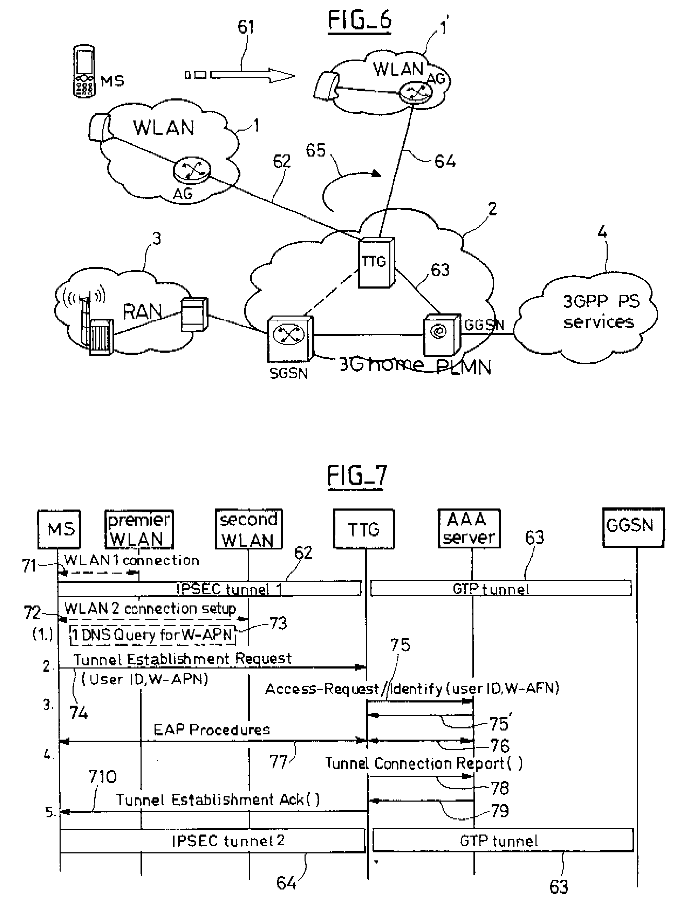

La **figure 6** illustre un troisième transfert de session de communication, depuis un premier réseau WLAN 1 vers un second réseau WLAN 1', selon un mode de réalisation particulier du procédé selon l'invention.

On suppose que la station mobile MS se déplace (comme illustré par la flèche référencée 61) de la zone de couverture du premier réseau WLAN 1 vers celle du second réseau WLAN 1'.

On suppose également que la session de communication utilise, avant le troisième transfert, un premier tunnel de bout en bout 62 entre la station mobile MS et la passerelle TTG, et un tunnel GTP 63 entre la passerelle TTG et le noeud GGSN.

Pour effectuer ce troisième transfert, un mode de réalisation particulier du procédé de l'invention comprend les étapes suivantes :
- remplacement du premier tunnel de bout en bout 62 entre la station mobile MS et la passerelle TTG, par un second tunnel de bout en bout 64 entre la station mobile MS et la passerelle TTG (ce remplacement est illustré par la flèche référencée 65) ;
- conservation du tunnel GTP 63 entre la passerelle TTG et le noeud GGSN.

On présente maintenant, en relation avec la **figure 7,** un exemple de diagramme d'échange de messages entre différentes entités du système pour effectuer le troisième transfert illustré sur la figure 6.

Les entités concernées, qui ont déjà été présentées ci-dessus, sont les suivantes : la station mobile MS, le premier réseau WLAN, le second réseau WLAN, la passerelle TTG, le serveur AAA et le noeud GGSN.

Avant le troisième transfert, une session de communication impliquant la station mobile MS utilise un tunnel de bout en bout 62 entre la station mobile MS et la passerelle TTG (s'appuyant notamment sur une connexion 71 entre la station mobile MS et le premier réseau WLAN), et un tunnel GTP 63 entre la passerelle TTG et le noeud GGSN.

Après s'être déplacée, la station mobile MS établit une connexion 72 avec le second réseau WLAN.

Puis, la station mobile MS effectue une demande DNS (pour « Domain Name System ») 73, afin de retrouver l'adresse IP de l'extrémité distante du tunnel GTP 63, c'est-à-dire la passerelle TTG.

Après qu'elle a obtenu l'adresse IP de la passerelle TTG, la station mobile MS envoie une requête d'établissement d'un tunnel de bout en bout (Tunnel Establishment Request (User-ID, W-APN)) 74 à la passerelle TTG.

Après réception de la requête précitée 74, la passerelle TTG contacte le serveur AAA (75, 75'), afin d'obtenir des informations d'autorisation et d'authentification permettant de lancer les procédures EAP (pour « Extensible Authentication Protocol ») 76, 77. Le serveur AAA vérifie que la session est déjà ouverte, et si c'est le cas, la passerelle TTG libère le premier tunnel de bout en bout 62 et établit un second tunnel de bout en bout 64.

La passerelle TTG envoie au serveur AAA une requête de mise à jour des informations d'autorisation et d'authentification relatives à la session de communication (Tunnel Connection Report) 78. Le serveur AAA envoie à la passerelle TTG un message 79 de confirmation de la mise à jour des informations d'autorisation et d'authentification.

Enfin, la passerelle TTG envoie à la station mobile MS un message d'acceptation de l'établissement d'un second tunnel de bout en bout (Tunnel Establishment Ack) 710.

## Revendications

1. Procédé de gestion d'un interfonctionnement entre au moins un réseau local sans fil (1, 1') et un réseau mobile (2, 3), **caractérisé en ce qu'**il comprend les étapes suivantes, dans le cas d'un premier transfert, depuis le réseau local sans fil vers le réseau mobile, d'une session de communication impliquant une station mobile (MS), ladite session de communication utilisant, avant ledit premier transfert, d'une part un tunnel de bout en bout (22) entre ladite station mobile (MS) et une passerelle TTG, et d'autre part un tunnel GTP (23) entre ladite passerelle TTG et un noeud GGSN :
- remplacement dudit tunnel GTP (23) entre ladite passerelle TTG et ledit noeud GGSN, par un tunnel GTP (24) entre un noeud SGSN et ledit noeud GGSN ;
- libération dudit tunnel de bout en bout (22) entre ladite station mobile (MS) et ladite passerelle TTG.

2. Procédé selon la revendication 1, **caractérisé en ce que**, dans le cas dudit premier transfert, ladite étape de remplacement dudit tunnel GTP (23) entre ladite passerelle TTG et ledit noeud GGSN, par un tunnel GTP (24) entre un noeud SGSN et ledit noeud GGSN, comprend les étapes suivantes :
- la station mobile (MS) envoie au noeud SGSN une requête de mise à jour d'une zone de routage (33), comprenant un identifiant neutre indiquant que la station mobile vient d'un réseau local sans fil ;
- le noeud SGSN envoie à un serveur de localisation (HLR) une requête d'informations de localisation relatives à ladite session de communication (34), et en retour ledit serveur de localisation (HLR) envoie au noeud SGSN une adresse de ladite passerelle TTG ;
- le noeud SGSN envoie à ladite passerelle TTG une requête d'informations de contexte relatives à ladite session de communication (36), et en retour ladite passerelle TTG envoie au noeud SGSN lesdites informations de contexte ;
- le noeud SGSN envoie au noeud GGSN une requête de mise à jour d'informations de contexte relatives à ladite session de communication (310) ;
- le noeud SGSN et le noeud GGSN établissent entre eux un tunnel GTP.

3. Procédé selon l'une quelconque des revendications 1 et 2, **caractérisé en ce que**, dans le cas dudit premier transfert, ladite étape de libération dudit tunnel de bout en bout (22) entre ladite station mobile (MS) et ladite passerelle TTG comprend les étapes suivantes :
- le noeud SGSN envoie au serveur de localisation (HLR) une requête de mise à jour des informations de localisation relatives à ladite session de communication (312) ;
- le serveur de localisation (HLR) envoie à ladite passerelle TTG une requête de libération dudit tunnel de bout en bout entre ladite station mobile (MS) et ladite passerelle TTG (313).

4. Procédé selon la revendication 3, **caractérisé en ce que**, dans le cas dudit premier transfert, ladite étape de libération dudit tunnel de bout en bout entre ladite station mobile (MS) et ladite passerelle TTG comprend en outre les étapes suivantes :
- ladite passerelle TTG envoie au serveur de localisation (HLR) un message de confirmation de ladite libération (314) ;
- le serveur de localisation (HLR) envoie au noeud SGSN un message de confirmation de ladite mise à jour des informations de localisation (315) ;
- le noeud SGSN envoie à la station mobile un message d'acceptation de la mise à jour de la zone de routage (316).

5. Procédé selon l'une quelconque des revendications 1 à 4, **caractérisé en ce qu'**il comprend les étapes suivantes, dans le cas d'un deuxième transfert, depuis le réseau mobile vers le réseau local sans fil, d'une session de communication impliquant une station mobile (MS), ladite session de communication utilisant, avant ledit deuxième transfert, un tunnel GTP (44) entre un noeud SGSN et un noeud GGSN :
- établissement d'un tunnel de bout en bout (42) entre une station mobile (MS) et une passerelle TTG ;
- remplacement dudit tunnel GTP (44) entre ledit noeud SGSN et ledit noeud GGSN, par un tunnel GTP (43) entre ladite passerelle TTG et ledit noeud GGSN.

6. Procédé selon la revendication 5, **caractérisé en ce que**, dans le cas dudit deuxième transfert, ladite étape d'établissement d'un tunnel de bout en bout entre ladite station mobile (MS) et ladite passerelle TTG comprend les étapes suivantes :
- la station mobile (MS) obtient une adresse de la passerelle TTG ;
- la station mobile (MS) envoie une requête d'établissement d'un tunnel de bout en bout (54) à la passerelle TTG ;
- la passerelle TTG obtient (55, 55') d'un serveur AAA des informations d'autorisation et d'authentification permettant l'établissement d'un tunnel de bout en bout entre ladite station mobile (MS) et ladite passerelle TTG.

7. Procédé selon l'une quelconque des revendications 5 et 6, **caractérisé en ce que**, dans le cas dudit deuxième transfert, ladite étape remplacement dudit tunnel GTP entre ledit noeud SGSN et ledit noeud GGSN, par un tunnel GTP entre ladite passerelle TTG et ledit noeud GGSN, comprend les étapes suivantes :
- la passerelle TTG envoie au serveur de localisation (HLR) une requête d'informations de localisation relatives à ladite session de communication (58), et en retour ledit serveur de localisation (HLR) envoie à la passerelle TTG une adresse dudit noeud SGSN ;
- la passerelle TTG envoie audit noeud SGSN une requête d'informations de contexte relatives à ladite session de communication (510), et en retour ledit noeud SGSN envoie à la passerelle TTG lesdites informations de contexte ;
- la passerelle TTG envoie au noeud GGSN une requête de mise à jour d'informations de contexte relatives à ladite session de communication (512) ;
- la passerelle TTG et le noeud GGSN établissent entre eux un tunnel GTP.

8. Procédé selon les revendications 4 à 6, **caractérisé en ce que**, dans le cas dudit deuxième transfert, ladite étape d'établissement d'un tunnel de bout en bout entre ladite station mobile (MS) et ladite passerelle TTG comprend en outre les étapes suivantes :
- la passerelle TTG envoie au serveur de localisation (HLR) une requête de mise à jour des informations de localisation relatives à ladite session de communication (514) ;
- le serveur de localisation (HLR) envoie au noeud SGSN une requête de suppression d'informations de localisation relatives à ladite session de communication (515) ;
- le noeud SGSN envoie au serveur de localisation (HLR) un message de confirmation de ladite suppression (516) ;
- le serveur de localisation (HLR) envoie à la passerelle TTG un message de confirmation de ladite mise à jour des informations de localisation (517) ;
- la passerelle TTG envoie à la station mobile un message d'acceptation de l'établissement d'un tunnel de bout en bout (518).

9. Procédé selon l'une quelconque des revendications 1 à 8, **caractérisé en ce qu'**il comprend les étapes suivantes, dans le cas d'un troisième transfert, depuis un premier réseau local sans fil (1) vers un second réseau local sans fil (1'), d'une session de communication impliquant une station mobile (MS), ladite session de communication utilisant, avant ledit troisième transfert, d'une part un premier tunnel de bout en bout (62) entre ladite station mobile (MS) et une passerelle TTG, et d'autre part un tunnel GTP (63) entre ladite passerelle TTG et un noeud GGSN :
- remplacement dudit premier tunnel de bout en bout (62) entre ladite station mobile (MS) et ladite passerelle TTG, par un second tunnel de bout en bout (64) entre ladite station mobile (MS) et ladite passerelle TTG ;
- conservation dudit tunnel GTP (63) entre ladite passerelle TTG et ledit noeud GGSN.

10. Procédé selon la revendication 9, **caractérisé en ce que**, dans le cas dudit troisième transfert, ladite étape de remplacement dudit premier tunnel de bout en bout par ledit second tunnel de bout en bout comprend les étapes suivantes :
- la station mobile (MS) obtient une adresse de la passerelle TTG;
- la station mobile (MS) envoie une requête d'établissement d'un second tunnel de bout en bout (74) à la passerelle TTG ;
- la passerelle TTG obtient (75, 75') d'un serveur AAA des informations d'autorisation et d'authentification relatives à ladite session de communication et permettant l'établissement d'un second tunnel de bout en bout entre ladite station mobile (MS) et ladite passerelle TTG ;
- la passerelle TTG libère ledit premier tunnel de bout en bout et établit ledit second tunnel de bout en bout.

11. Procédé selon la revendication 10, **caractérisé en ce que**, dans le cas dudit troisième transfert, ladite étape de remplacement dudit premier tunnel de bout en bout par ledit second tunnel de bout en bout comprend en outre les étapes suivantes :
- la passerelle TTG envoie au serveur AAA une requête de mise à jour des informations d'autorisation et d'authentification relatives à ladite session de communication (78) ;
- le serveur AAA envoie à la passerelle TTG un message de confirmation de ladite mise à jour des informations d'autorisation et d'authentification (79);
- la passerelle TTG envoie à la station mobile (MS) un message d'acceptation de l'établissement d'un second tunnel de bout en bout (710).

12. Station mobile (MS) permettant la mise en oeuvre d'un procédé de gestion d'un interfonctionnement entre au moins un réseau local sans fil (WLAN) et un réseau mobile (3GPP), **caractérisée en ce qu'**elle comprend, de façon à permettre un premier transfert, depuis le réseau local sans fil vers le réseau mobile, d'une session de communication impliquant une station mobile (MS) et utilisant avant ledit premier transfert, d'une part un tunnel de bout en bout entre ladite station mobile (MS) et une passerelle TTG, et d'autre part un tunnel GTP entre ladite passerelle TTG et ledit noeud GGSN:
- des moyens d'envoi à un noeud SGSN d'une requête de mise à jour d'une zone de routage (Routing Area Update Request), avec un identifiant neutre indiquant que ladite station mobile vient d'un réseau local sans fil.

13. **Noeud SGSN** permettant la mise en oeuvre d'un procédé de gestion d'un interfonctionnement entre au moins un réseau local sans fil (WLAN) et un réseau mobile (3GPP), **caractérisé en ce qu'**il comprend, de façon à permettre un premier transfert, depuis le réseau local sans fil vers le réseau mobile, d'une session de communication impliquant une station mobile (MS) et utilisant avant ledit premier transfert, d'une part un tunnel de bout en bout entre ladite station mobile (MS) et une passerelle TTG, et d'autre part un tunnel GTP entre ladite passerelle TTG et ledit noeud GGSN :
- des moyens de réception d'une requête de mise à jour d'une zone de routage (Routing Area Update Request), envoyée par ladite station mobile (MS) et comprenant un identifiant neutre indiquant que la station mobile vient d'un réseau local sans fil ;
- des moyens d'envoi à un serveur de localisation (HLR) d'une requête d'informations de localisation relatives à ladite session de communication (Location Request), et des moyens de réception en retour d'une adresse de ladite passerelle TTG ;
- des moyens d'envoi à ladite passerelle TTG d'une requête d'informations de contexte relatives à ladite session de communication (SGSN Context Request), et des moyens de réception en retour desdites informations de contexte ;
- des moyens d'envoi au noeud GGSN d'une requête de mise à jour d'informations de contexte relatives à ladite session de communication (Update PDP Context Request) ;
- des moyens d'établissement d'un tunnel GTP entre le noeud SGSN et le noeud GGSN.

14. Noeud SGSN selon la revendication 13, **caractérisé en ce qu'**il comprend en outre, de façon à permettre un deuxième transfert, depuis le réseau mobile vers le réseau local sans fil, d'une session de communication impliquant une station mobile (MS), ladite session de communication utilisant, avant ledit deuxième transfert, un tunnel GTP entre un noeud SGSN et un noeud GGSN :
- des moyens de réception d'une requête d'informations de contexte relatives à ladite session de communication (SGSN Context Request), envoyée par une passerelle TTG ;
- des moyens d'envoi desdites informations de contexte à ladite passerelle TTG.

15. Passerelle TTG permettant la mise en oeuvre d'un procédé de gestion d'un interfonctionnement entre au moins un réseau local sans fil (WLAN) et un réseau mobile (3GPP), **caractérisée en ce qu'**elle comprend, de façon à permettre un premier transfert, depuis le réseau local sans fil vers le réseau mobile, d'une session de communication impliquant une station mobile (MS) et utilisant avant ledit premier transfert, d'une part un tunnel de bout en bout entre ladite station mobile (MS) et ladite passerelle TTG, et d'autre part un tunnel GTP entre ladite passerelle TTG et ledit noeud GGSN :
- des moyens de réception d'une requête d'informations de contexte relatives à ladite session de communication (SGSN Context Request), envoyée par un noeud SGSN;
- des moyens d'envoi desdites informations de contexte au noeud SGSN.

16. Passerelle TTG selon la revendication 15, **caractérisée en ce qu'**elle comprend en outre, de façon à permettre un deuxième transfert, depuis le réseau mobile vers le réseau local sans fil, d'une session de communication impliquant une station mobile (MS), ladite session de communication utilisant, avant ledit deuxième transfert, un tunnel GTP entre un noeud SGSN et un noeud GGSN :
- des moyens d'envoi à un serveur de localisation (HLR) d'une requête d'informations de localisation relatives à ladite session de communication (Location Request), et des moyens de réception en retour d'une adresse dudit noeud SGSN ;
- des moyens d'envoi audit noeud SGSN d'une requête d'informations de contexte relatives à ladite session de communication (SGSN Context Request), et des moyens de réception en retour desdites informations de contexte ;
- des moyens d'envoi au noeud GGSN d'une requête de mise à jour d'informations de contexte relatives à ladite session de communication (Update PDP Context Request) ;
- des moyens d'établissement d'un tunnel GTP entre la passerelle TTG et le noeud GGSN.

17. **Passerelle TTG** selon l'une quelconque des revendications 15 et 16, **caractérisée en ce qu'**elle comprend en outre, de façon à permettre un troisième transfert, depuis un premier réseau local sans fil vers un second réseau local sans fil, d'une session de communication impliquant une station mobile (MS), ladite session de communication utilisant, avant ledit troisième transfert, d'une part un premier tunnel de bout en bout entre ladite station mobile (MS) et ladite passerelle TTG, et d'autre part un tunnel GTP entre ladite passerelle TTG et un noeud GGSN :
- des moyens de réception d'une requête d'établissement d'un second tunnel de bout en bout, envoyée par la station mobile (MS) ;
- des moyens d'obtention, auprès d'un serveur AAA, d'informations d'autorisation et d'authentification relatives à ladite session de communication et permettant l'établissement d'un second tunnel de bout en bout entre ladite station mobile (MS) et ladite passerelle TTG ;
- des moyens de libération dudit premier tunnel de bout en bout ;
- des moyens d'établissement dudit second tunnel de bout en bout.
